(19) Europäisches Patentamt
European Patent Office
Office européen des brevets

(11) EP 1 470 166 B1

(12) **EUROPEAN PATENT SPECIFICATION**

(45) Date of publication and mention of the grant of the patent:
**14.02.2007 Bulletin 2007/07**

(21) Application number: **02796620.9**

(22) Date of filing: **12.12.2002**

(51) Int Cl.:
***C08F 10/02*** *(2006.01)* ***C08F 297/08*** *(2006.01)*

(86) International application number:
**PCT/EP2002/014171**

(87) International publication number:
**WO 2003/051937 (26.06.2003 Gazette 2003/26)**

(54) **PHYSICAL BLEND OF POLYETHYLENES**

PHYSIKALISCHE POLYETHYLENMISCHUNGEN

MELANGE PHYSIQUE DE POLYETHYLENES

(84) Designated Contracting States:
**AT BE BG CH CY CZ DE DK EE ES FI FR GB GR IE IT LI LU MC NL PT SE SI SK TR**

(30) Priority: **14.12.2001 EP 01204887**

(43) Date of publication of application:
**27.10.2004 Bulletin 2004/44**

(73) Proprietor: **TOTAL PETROCHEMICALS RESEARCH FELUY**
**7181 Seneffe (Feluy) (BE)**

(72) Inventor: **MAZIERS, Eric**
**B-7180 Seneffe (BE)**

(74) Representative: **Leyder, Francis**
**Total Petrochemicals Research Feluy**
**Zone Industrielle C**
**7181 Seneffe (Feluy) (BE)**

(56) References cited:
**EP-A- 0 533 154** **EP-A- 0 989 140**

Remarks:
The file contains technical information submitted after the application was filed and not included in this specification

EP 1 470 166 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention relates to the production and use of semi-high molecular weight polyethylene resins produced by physical blends of polyethylenes. The final resins have improved environmental stress crack resistance and impact, improved processing and can be used for applications in blow-molding or for pipes.

Polyolefins such as polyethylenes which have high molecular weight generally have improved mechanical properties over their lower molecular weight counterparts. However, high molecular weight polyolefins can be difficult to process and can be costly to produce. Polyolefins having a bimodal molecular weight distribution are desirable because they can combine the advantageous mechanical properties of high molecular weight fraction with the improved processing properties of the low molecular weight fraction.

For many HDPE applications, polyethylene with enhanced toughness, strength and environmental stress cracking resistance (ESCR) is important. These enhanced properties are more readily attainable with high molecular weight polyethylene. However, as the molecular weight of the polymer increases, the processability of the resin decreases. By providing a polymer with a broad or bimodal MWD, the desired properties that are characteristic of high molecular weight resin are retained while processability, particularly extrudibility, is improved.

There are several methods for the production of bimodal or broad molecular weight distribution resins: melt blending, reactor in series configuration, or single reactor with dual site catalysts. Use of a dual site catalyst for the production of a bimodal resin in a single reactor is also known.

Chromium catalysts for use in polyolefin production tend to broaden the molecular weight distribution and can in some cases produce bimodal molecular weight distribution but usually the low molecular part of these resins contains a substantial amount of the comonomer. Whilst a broadened molecular weight distribution provides acceptable processing properties, a bimodal molecular weight distribution can provide excellent properties. In some cases it is even possible to regulate the amount of high and low molecular weight fraction and thereby regulate the mechanical properties.

Ziegler Natta catalysts are known to be capable of producing bimodal polyethylene using two reactors in series. Typically, in a first reactor, a low molecular weight homopolymer is formed by reaction between hydrogen and ethylene in the presence of the Ziegler Natta catalyst. It is essential that excess hydrogen be used in this process and, as a result, it is necessary to remove all the hydrogen from the first reactor before the products are passed to the second reactor. In the second reactor, a copolymer of ethylene and hexene is made so as to produce a high molecular weight polyethylene.

Metallocene catalysts are also known in the production of polyolefins. For example, EP-A-0619325 describes a process for preparing polyolefins such as polyethylenes having a multimodal or at least bimodal molecular weight distribution. In this process, a catalyst system which includes at least two metallocenes is employed. The metallocenes used are, for example, a bis(cyclopentadienyl) zirconium dichloride and an ethylene bis(indenyl) zirconium dichloride. By using the two different metallocene catalysts in the same reactor, a molecular weight distribution is obtained which is at least bimodal.

Polyethylene resins are known for the production of pipes. Pipe resins require high resistance against slow crack growth as well as resistance to rapid crack propagation yielding impact toughness. There is a need to improve in the performance of currently available pipe resins.

EP-A-0600482 discloses the production of a resin composition for films that includes two polyethylene components, one of the components being prepared using a metallocene catalyst comprising ethylene-bis(4,5,6,7-tetrahydroindenyl) zirconium dichloride.

EP-A-0575123 discloses an ethylene polymer composition which may be produced using a metallocene catalyst.

EP-A-0735090 discloses a polyethylene resin composition which is produced by physical blending of three polyethylene components.

EP-A-0791627 discloses a polyethylene resin composition which is produced using a metallocene catalyst.

WO-A-95/26990 discloses a process for producing polymers of multi-modal molecular weight distributions using metallocene catalysts.

EP-A-533 154 discloses Ethylene polymer blends of a virgin or recycled low molecular weight ethylene polymer produced from a chromium-based catalyst and a high molecular weight ethylene polymer produced from a titanium-based catalyst, exhibiting excellent processing characteristics, environmental stress crack resistance and stiffness. These ethylene polymer blends are useful for use in bottle, film, pipe, and/or drum applications.

The present invention aims to overcome the disadvantages of the prior art and to produce easily and economically polyethylene resins with specific properties.

It is an object of the present invention to produce polyethylene resins having improved stress crack resistance.

It is another object of the present invention to produce polyethylene resins having improved impact strength.

It is also an object of the present invention to prepare polyethylene resins having improved processing.

Accordingly, the present invention provides a process for the preparation of polyethylene resins having a multimodal molecular weight distribution according to claim 1, or a bimodal molecular weight distribution according to

claim 6.

The present invention discloses a process for the preparation of polyethylene resins having a multimodal molecular weight distribution that comprises the steps of:

(i) supplying ethylene and the alpha-definic comonomer to the reactor containing a metallocene catalyst in order to prepare a first high molecular weight metallocene-produced linear low density polyethylene (mLLDPE) resin having a density of from 0.920 to 0.940 g/cm$^3$ and a HLMI of from 0.01 to 2 g/10 min (ASTM D 1238)
(ii) supplying to the reactor a chromium-based catalyst or a Ziegler-Natta catalyst and feeding ethylene and comonomer, if present, to prepare a second high density polyethylene (HDPE) having a monomodal molecular weight distribution and prepared either with a Ziegler-Natta or with a chromium based catalyst, said polyethylene having a density ranging from 0.950 to 0.970 g/cm$^3$ and a HLMI of from 5 to 100 g/10 min;
(iii) physically blending together the first and second polyethylenes to form a polyethylene resin having a semi-high molecular weight, a multimodal molecular weight distribution, a density ranging from 0.948 to 0.958 g/cm$^3$ and a HLMI of from 2 to 12 g/10 min.

In this specification, the HLMI is measured by the procedures of ASTM D 1238 using a load of 21.6kg at a temperature of 190 °C and the density is measured at 23 °C by the procedures of standard test ASTM D 1505.

The first polyethylene is monomodal and is produced with a metallocene catalyst. The second polyethylene may have a monomodal molecular weight distribution and may be produced using a Ziegler-Natta catalyst or a chromium-oxide based catalyst. Alternatively, the second polyethylene may have a bimodal molecular weight distribution and may be produced using one or two of those different catalyst systems. Preferably, it has a broad monomodal molecular weight distribution and it is prepared with a multisite chromium-based catalyst system in a single reactor.

The final polyethylene resin has a broad or multimodal molecular weight distribution and is produced by physically blending the first and second polyethylenes together.

In the embodiments of the invention, the low-density fraction produced using the metallocene catalyst comprises at least 5 wt% of the resultant polyethylene resin.

The use of a metallocene catalyst component enables the preparation of a high molecular weight linear low-density polyethylene fraction said fraction having a very narrow molecular weight distribution. This yields both improved slow and rapid crack propagation properties as a result of a high and uniform level of comonomer distribution in the low density fraction. The density is preferably not more than 0.935 g/cm$^3$, more preferably not more than 0.930 g/cm$^3$, compared to somewhat higher low density fractions achievable by Ziegler-Natta or chromium based catalysts, particularly when used in a slurry loop process. Thus the use of this metallocene catalyst enables precise control of the molecular weight distribution and density of the high molecular weight fraction of the resin, yielding improved mechanical properties and processability. The HLMI of the high molecular weight, low-density fraction is very low, of the order of from 0.05 to 5 g/10 min. The values of HLMI are representative of the high molecular weight of the fraction. The molecular weight of the metallocene-produced resins is very large and can be typically larger than 400,000, preferably it is of from 400,000 to 700,000.

Typically, overall the broad molecular weight distribution polyethylene resins of the present invention have a density of from 0.948 to 0.958g/cm$^3$ with an HLMI of 10, 2 to 12 g/10 min. The resins consist not only of the high molecular weight fraction, but also a low molecular weight fraction whereby the resins as a whole have a broad or multimodal molecular weight distribution. The provision of such a multimodal distribution yields a combination of improved mechanical properties of the resin, without compromising the processability.

In accordance with this invention, the low molecular weight fraction of the polyethylene resin may be constituted by a second polyethylene which typically has a monomodal or bimodal molecular weight distribution and is produced by ethylene homo and/or copolymerisation in the presence of a Ziegler-Natta catalyst system and/or a chromium-oxide based catalyst system.

The first and second polyethylenes constitute separately produced resins which are then physically blended to form the composite polyethylene resin having a multimodal molecular weight distribution. The production of the polyethylene comprising the lower molecular weight fraction of the composite resin can be controlled to give the desired processing properties for the resin. It has been shown that the combination of low branching (ideally no branching) in the low molecular part of the resin and high comonomer incorporation in the high molecular part significantly improves the resin properties with respect to resistance to slow crack growth and impact strength. In the drop test, the resins of the present invention have also shown a remarkable behaviour. These properties are important for many applications such as fuel tanks, jerrycans, containers of various sizes or pipes.

Preferably, the first polyethylene has a density of less than 0.925 g/ml. The density of the second polyethylene is higher and must be adjusted to produce the desired final density and the desired HLMI, using the predictive empirical equations:

$$D_{blend} = \Sigma \%n \cdot D_n$$

for the density, and

$$HLMI_{blend} = 0.652 \, \Pi \, HLMI_n^{\%n}$$

Preferably, the physical blend comprises from 5 to 50 wt%, preferably from 15 to 50 wt% of the first metallocene-produced linear low density polyethylene and from 95 to 50 wt%, preferably from 85 to 50 wt% of the second non-metallocene high density polyethylene.

The present invention also discloses a process for the preparation of polyethylene resins having a bimodal molecular weight distribution which comprises the steps of:

(i) providing a first polyethylene by contacting an ethylene monomer and a comonomer comprising an alpha-olefin having from 3 to 10 carbon atoms with a first catalyst system in a first reactor under first polymerisation conditions to produce a first polyethylene having a first molecular weight, an HLMI of not more than 1.5 g/10min and a first density of not more than 0.930g/ml and the first catalyst system comprising (a) a metallocene catalyst comprising a bis tetrahydroindenyl catalyst component; and (b) an activating agent capable of activating the catalyst component;
(ii) supplying to the reactor a chromium-based catalyst on a Ziegler-Natta catalyst and feeding ethylene and comonomer, if present, to prepare a second polyethylene having a second higher density and a second larger HLMI than the first polyethylene, the density being comprised in the range of 0.950 to 0.970 g/cm$^3$ and the HLMI being comprised in the range of 5 to 100 g/10 min, said polyethylene having a monomodal molecular weight distribution;
(iii) physically blending together the first and second polyethylenes to form a polyethylene resin having a bimodal molecular weight distribution, an HLMI of from 2 to 12 g/10min and a density of from 0.948 to 0.958 g/ml.

Embodiments of the present invention will now be described by way of examples. Figures 1 and 2 are gel permeation chromatographs of resins produced in accordance with the invention.

<u>METALLOCENE COMPONENTS</u>

The metallocene catalyst component used in the present invention is preferably a bis(tetrahydroindenyl) metallocene component in which each tetrahydroindenyl compound may be substituted in the same way or differently from one another at one or more positions in the cyclopentadienyl ring, the cyclohexenyl ring and the ethylene bridge. Each substituent group may be independently chosen from those of formula $XR_v$ in which X is chosen from group IVA, oxygen and nitrogen and each R is the same or different and chosen from hydrogen or hydrocarbyl of from 1 to 20 carbon atoms and v+1 is the valence of X. X is preferably C. If the cyclopentadienyl ring is substituted, its substituent groups must not be so bulky as to affect coordination of the olefin monomer to the metal M. Substituents on the cyclopentadienyl ring preferably have R as hydrogen or CH3. More preferably, at least one and most preferably both cyclopentadienyl rings are unsubstituted.

In a particularly preferred embodiment, both indenyls are unsubstituted.

Preferably, the metallocene component has a bridge R" that is preferably a methylene or ethylene bridge either substituted or unsubstituted.

The metal M is preferably zirconium, hafnium or titanium, most preferably zirconium. Each Q is the same or different and may be a hydrocarbyl or hydrocarboxy radical having 1-20 carbon atoms or a halogen. Suitable hydrocarbyls include aryl, alkyl, alkenyl, alkylaryl or aryl alkyl. Each Q is preferably halogen. Ethylene bis(4,5,6,7-tetrahydro-1-indenyl) zirconium dichloride is a particularly preferred bis tetrahydroindenyl compound of the present invention.

The metallocene catalyst component used in the present invention can be prepared by any known method. A preferred preparation method is described in J. Org. Chem. <u>288,</u> 63-67 (1985).

The cocatalyst which activates the metallocene catalyst component can be any cocatalyst known for this purpose such as an aluminium-containing cocatalyst or a boron-containing cocatalyst. The aluminium-containing cocatalyst may comprise an alumoxane, an alkyl aluminium and/or a Lewis acid.

The alumoxanes are well known and preferably comprise oligomeric linear and/or cyclic alkyl alumoxanes represented by the formula:

(I) 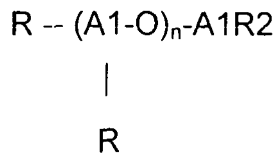

for oligomeric, linear alumoxanes and

(II) 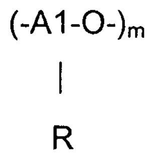

for oligomeric, cyclic alumoxane,

wherein n is 1-40, preferably 10-20, m is 3-40, preferably 3-20 and R is a $C_1$-$C_8$ alkyl group and preferably methyl.

Generally, in the preparation of alumoxanes from, for example, aluminium trimethyl and water, a mixture of linear and cyclic compounds is obtained.

Suitable boron-containing cocatalysts may comprise a triphenylcarbenium boronate such as tetrakis-pentafluorophenyl-borato-triphenylcarbenium as described in EP-A-0427696, or those of the general formula [L'-H] + [B $Ar_1$ $Ar_2$ $X_3$ $X_4$]- as described in EP-A-0277004 (page 6, line 30 to page 7, line 7).

The metallocene catalyst system may be employed in a solution polymerisation process, which is homogeneous, or a slurry process, which is heterogeneous. In a solution process, typical solvents include hydrocarbons with 4 to 7 carbon atoms such as heptane, toluene or cyclohexane. In a slurry process it is necessary to immobilise the catalyst system on an inert support, particularly a porous solid support such as talc, inorganic oxides and resinous support materials such as polyolefin. Preferably, the support material is an inorganic oxide in its finally divided form.

Suitable inorganic oxide materials which are desirably employed in accordance with this invention include Group 2a, 3a, 4a or 4b metal oxides such as silica, alumina and mixtures thereof. Other inorganic oxides that may be employed either alone or in combination with the silica, or alumina are magnesia, titania, zirconia, and the like. Other suitable support materials, however, can be employed, for example, finely divided functionalised polyolefins such as finely divided polyethylene. Preferably, the support is a silica having a surface area comprised between 200 and 900 $m^2$/g and a pore volume comprised between 0.5 and 4 $cm^3$/g.

The amount of alumoxane and metallocenes usefully employed in the preparation of the solid support catalyst can vary over a wide range. Preferably the aluminium to transition metal mole ratio is in the range between 1:1 and 100:1, preferably in the range 5:1 and 50:1.

The order of addition of the metallocenes and alumoxane to the support material can vary. In accordance with a preferred embodiment of the present invention alumoxane dissolved in a suitable inert hydrocarbon solvent is added to the support material slurried in the same or other suitable hydrocarbon liquid and thereafter a mixture of the metallocene catalyst component is added to the slurry.

Preferred solvents include mineral oils and the various hydrocarbons which are liquid at reaction temperature and which do not react with the individual ingredients. Illustrative examples of the useful solvents include the alkanes such as pentane, iso-pentane, hexane, heptane, octane and nonane; cycloalkanes such as cyclopentane and cyclohexane; and aromatics such as benzene, toluene, ethylbenzene and diethylbenzene.

Preferably the support material is slurried in toluene and the metallocene and alumoxane are dissolved in toluene prior to addition to the support material.

Where the reaction is performed in a slurry using, for example, isobutane, a reaction temperature in the range 70 °C to 110 °C may be used. Where the reaction is performed in solution, by selection of a suitable solvent a reaction temperature in the range 150 °C to 300 °C may be used. The reaction may also be performed in the gas phase using a suitably supported catalyst.

In accordance with the invention, ethylene and the alpha-olefinic comonomer are supplied to the reactor containing the metallocene catalyst. Typical comonomers include hexene, butene, octene or methylpentene, preferably hexene. Hydrogen may be additionally supplied to the first reaction zone. Because the metallocene catalyst component

of the present invention exhibits good comonomer response as well as good hydrogen response, substantially all of the comonomer is consumed in the first reactor in this embodiment. This produces high molecular weight polyethylene copolymer having a monomodal molecular weight distribution.

The temperature of the reactor may be in the range of from 70°C to 110°C, preferably from 70°C to 100°C.

The HLMI of the high molecular weight polyethylene, comprising a linear low-density polyethylene, made in accordance with the present invention typically falls in the range 0.01 to 2 g/10 min, preferably in the range. The density of the high molecular weight resin fraction is typically in the range 0.920 to 0.940 g/ml. The high molecular weight polyethylene fraction preferably has a molecular weight distribution in the range 2 to 4.5, preferably around 3 and more preferably is partially long chain branched so as to facilitate processing.

CHROMIUM-BASED CATALYSTS

The chromium-based catalyst preferably comprises a silica, silica-alumina and/or titania supported chromium oxide catalyst. A particularly preferred chromium-based catalyst may comprise from 0.5 to 5 wt% chromium, preferably around 1 wt%, on a catalyst support. The weight percentage of chromium is based on the weight of the chromium-containing catalyst. The chromium-based catalyst may have a specific surface area of from 200 to 700 $m^2/g$, preferably from 400 to 550 $m^2/g$ and a volume porosity of from 0.9 to 3 cc/g, preferably from 2 to 3 cc/g. The average pore radius is preferably from 100 to 1000Angström, most preferably from 150 to 250 Angström.

A preferred chromium-based catalyst for use in the present invention comprises a catalyst which has an average pore radius of 190 Angströms, a pore volume of around 2.1 $cm^3/g$ and a chromium content of around 1 wt% based on the weight of the chromium-containing catalyst. The support comprises a silica and titania support.

The chromium-based catalyst may have been subjected to a reduction and reoxidation process in which at least a portion of the chromium is reduced to a low valance state and then at least a portion of the chromium is reoxidised to a higher valance state. Such a reduction and reoxidation process is known in the art. Preferably, the chromium-based catalyst is reduced in an atmosphere of dry carbon monoxide in known manner at a temperature of from 700 to 900 °C, preferably at a temperature of around 860 °C. The chromium-based catalyst is then reoxidised in air in known manner at a temperature of from 700 to 900 °C, preferably at a temperature of around 760 °C. Alternatively, the chromium-based catalyst may have been activated at a relatively low temperature, fluoridised before or after the activation step to increase the activity of the catalyst and then reduced. In this alternative, the chromium-based catalyst may either be a fluorine-containing catalyst which is commercially available, or may be a similar yet non-fluorine-containing catalyst, which is then subjected to a fluoridisation or fluorination step which is performed in known manner. For example, the chromium-based catalyst may be premixed with a fluorine-containing compound such as ammonium boron tetrafluoride ($NH_4BF_4$) in solid form and then heated at elevated temperature so as to react together the catalyst and the fluorine-containing compound. Such a fluorinisation step may be performed before or during the activation step.

The catalyst is activated in air at a relatively low activation temperature ranging from 450 to 750 °C. More preferably, the activation is carried out at a temperature of from 500 to 650 °C. A most preferred activation temperature is around 540 °C.

Following the activation step, the second chromium-based catalyst may be subjected to a chemical reduction step employing dry carbon monoxide. The reduction step is preferably carried out at a temperature of from 300 to 500 °C. A most preferred reduction temperature is around 370 °C.

In the preferred process of the present invention to form the low molecular weight fraction of relatively high density using a chromium-based catalyst, the polymerisation or copolymerisation process is carried out in the liquid phase comprising ethylene, and where required an alpha-olefinic comonomer comprising from 3 to 10 carbon atoms, in an inert diluent. The comonomer may be selected from 1-butene, 1-pentene, 1-hexene, 4-methyl 1-pentene, 1-heptene and 1-octene. The inert diluent is preferably isobutane. The polymerisation or copolymerisation process is typically carried out at a temperature of from 85 to 110 °C, more preferably from 90 to 100 °C, and at a pressure of from 20 to 42 bar, more preferably at a minimum pressure of 24 bar.

Typically, in the polymerisation process the ethylene monomer comprises from 0.5 to 8% by weight, typically around 6% by weight, of the total weight of the ethylene in the inert diluent. Typically, in the copolymerisation process the ethylene monomer comprises from 0.5 to 8% by weight and the comonomer comprises from 0 to 4% by weight, each based on the total weight of the ethylene monomer and comonomer in the inert diluent.

The chromium-based catalyst is introduced into the polymerisation reactor. The alkylene monomer, and comonomer if present, are fed into the polymerisation reactor and the polymerisation product of HDPE is discharged from the reactor and separated from the diluent which can then be recycled.

ZIEGLER-NATTA CATALYSTS

In the preferred process of the present invention, the homopolymerisation process with optional copolymerisation, using a Ziegler-Natta catalyst to produce a polyethylene having a monomodal molecular weight distribution, is carried out in the liquid phase in an inert diluent, the reactants comprising ethylene and hydrogen for homopolymerisation and for copolymerisation ethylene and an alpha-olefinic comonomer comprising from 3 to 8 carbon atoms. The comonomer may be selected from 1-butene, 1-pentene, 1-hexene, 4-methyl 1-pentene, 1-heptene and 1-octene. The inert diluent may comprise isobutane.

The polymerisation process is preferably carried out at a temperature of from 50 to 120 °C, more preferably from 60 to 110 °C, under an absolute pressure of 1 to 100 bar.

In the reactor, the ethylene monomer preferably comprises from 0.1 to 3% by weight based on the total weight of the ethylene monomer in the inert diluent and the hydrogen comprises from 0.1 to 2 mol% on the same basis. A particularly preferred composition in the reactor comprises 1% by weight ethylene and 0.8 mol% hydrogen. If a minor degree of copolymerisation is also carried out in the reactor, an alpha-olefinic comonomer as described above, typically hexene, is also introduced into the reactor. The proportion of comonomer introduced is limited to an amount whereby the density of the polyethylene produced in the reactor is at least 0.950 g/cm$^3$. The polymerisation product from the reactor preferably has a melt index MI2 of from 1 to 200g/10min, more preferably from 2 to 100g/10min, the melt index MI2 being measured determined using the procedures of ASTM D1238 using a load of 2.16kg at a temperature of 190 °C. The melt index MI2 is broadly inversely indicative of the molecular weight of the polymer. In other words, a low melt index is indicative of a high molecular weight for the polymer and vice versa. Typically, the polyethylene produced in the reactor has a density of about 0.960 g/cm$^3$.

The Ziegler-Natta catalyst preferably consists of a transition metal component (compound A) which is the reaction product of an organomagnesium compound with a titanium compound and an organoaluminium component (compound B).

As transition metal compounds suitable for the preparation of compound A, there are used tetravalent halogenated titanium compounds, preferably titanium compounds of the general formula $TiX_n(OR)_{4-n}$ in which n is 1 to 4, X stands for chlorine or bromine, and R for identical or different hydrocarbon radicals, especially straight-chain or branched alkyl groups having 1 to 18, preferably 1 to 10, carbon atoms.

Examples thereof are:

$TiCl_4$, $Ti(OC_2H_5)_2Cl_2$, $Ti(OC_2H_5)_3Cl$, $Ti(OC_3H_7)_2Cl_2$, $Ti(OC_3H_7)_3Cl$, $Ti(OiC_3H_7)_2Cl_2$, $Ti(OiC_3H_7)_3Cl$, $Ti(OiC_4H_9)_2Cl_2$, $Ti(OiC_4H_9)_3Cl$

In some cases, it may be advantageous to prepare the halogeno-ortho-titanic acid esters of the above formula in situ by reacting the respective ortho-titanic acid ester with $TiCl_4$ in a corresponding proportion.

This reaction is advantageously carried out at temperatures of from 0 to 200 °C, the upper temperature limit being determined by the decomposition temperature of the tetravalent halogenated titanium compound used; it is advantageously carried out at temperatures of from 60 to 120 °C.

The reaction may be effected in inert diluents, for example aliphatic or cycloaliphatic hydrocarbons as are currently used for the low pressure process such as butane, pentane, hexane, heptane, cyclohexane, methyl-cyclohexane as well as aromatic hydrocarbons, such as benzene or toluene; hydrogenated Diesel oil fractions which have been carefully freed from oxygen, sulphur compounds and moisture are also useful.

Subsequently, the reaction product of magnesium alcoholate and tetravalent halogenated titanium compound which is insoluble in hydrocarbons is freed from unreacted titanium compound by washing it several times with one of the above inert diluents in which the titanium-(IV)-compound used is readily soluble.

For preparing compound A, magnesium alcoholates, preferably those of the general formula $Mg(OR)_2$ are used, in which R stands for identical or different hydrocarbon radicals, preferably straight-chain or branched alkyl groups having 1 to 10 carbon atoms; magnesium alcoholates having alkyl groups from 1 to 4 carbon atoms are preferred. Examples thereof are $Mg(OCH_3)_2$, $Mg(OC_2H_5)_2$, $Mg(OC_3H_7)_2$, $Mg(Oic_3H_7)_2$, $Mg(OC_4H_9)_2$, $Mg(OiC_4H_9)_2$, $Mg(OCH_2\text{-}CH_2\text{-}C_6H_5)_2$.

The magnesium alcoholates can be prepared by known methods, for example by reacting magnesium with alcohols, especially monohydric aliphatic alcohols.

Magnesium alcoholates of the general formula X-Mg-OR in which X stands for halogen, $(SO_4)_{1/2}$ carboxylate, especially acetate of OH, and R has the above composition, may also be used.

These compounds are, for example, obtained by reacting alcoholic solutions of the corresponding anhydrous acids with magnesium.

The titanium contents of compound A may be within the range of from 0.05 to 10mg.-atom, per gram of compound A. It can be controlled by the reaction time, the reaction temperature and the concentration of the tetravalent halogenated titanium compound used.

The concentration of the titanium component fixed on the magnesium compound is advantageously in the range of from 0.005 to 1.5mmol, preferably from 0.03 to 0.8mmol, per litre of dispersing agent or reactor volume. Generally, even higher concentrations are possible.

The organo-aluminium compounds used may be reaction products of aluminium-trialkyl or aluminium -dialkyl

hydrides with hydrocarbon radicals having 1 to 16 carbon atoms, preferably $Al(iBu)_3$ or $Al(iBu)_2H$ and diolefins containing 4 to 20 carbon atoms, preferably isoprene; for example aluminium isoprenyl.

Furthermore, suitable as compound B are chlorinated organo-aluminium compounds, for example dialkyl-aluminium monochlorides of the formula $R_2AlCl$ or alkyl-aluminium sesquichlorides of the formula $R_3Al_2Cl_3$, in which formulae R stands for identical or different hydrocarbon radicals, preferably alkyl groups having 1 to 16 carbon atoms, preferably 2 to 12 carbon atoms, for example $(C_2H_5)_2AlCl$, $(iC_4H_9)_2AlCl$, or $(C_2H_5)_3Al_2Cl_3$.

It is advantageous to use, as compound B, aluminium-trialkyls of the formula $AlR_3$ or aluminium-dialkyl hydrides of the formula $AlR_2H$, in which formulae R stands for identical or different hydrocarbons, preferably alkyl groups having 1 to 16, preferably 2 to 6, carbon atoms, for example $Al(C_2H_5)_3$, $Al(C_2H_5)_2H$, $Al(C_3H_7)_3$, $Al(C_3H_7)_2H$, $Al(iC_4H_9)_3$, or Al $(iC_4H_9)_2H$.

The organoaluminium may be used in a concentration of from 0.5 to 10mmol per litre of reactor volume.

Optionally, a cocatalyst such as a triethylaluminium (TEAL) is employed in the reactor, for example in an amount of around 250ppm by weight based on the weight of the inert diluent.

According to the present invention, each polyethylene is produced individually in a reactor, preferably a loop reactor and physically blended with one another for example by extrusion or melt blending. In this way, the low molecular weight and high molecular weight parts of the polyethylene resin can be produced in separate reactors.

The invention will now be described in further detail, by way of examples.

**List of Figures.**

Figure 1 represents the molecular weight distributions of the Ziegler-Natta high density polyethylene (HDPE) resin ZN1 and of the blends B1 to B4 of a metallocene-produced linear low density polyethylene (mLLDPE) with the Ziegler-Natta HDPE ZN1.

Figure 2 represents the molecular weight distributions of the chromium high density polyethylene (HDPE) resin CR2 and of the blends B9 to B12 of a metallocene-produced linear low density polyethylene (mLLDPE) with the chromium HDPE CR2.

Figure 3 represents the viscosity expressed in Pa.s as a function of frequency expressed in rads/s for the Ziegler-Natta HDPE resin ZN1 and for the blends B1 to B4 of a mLLDPE with the Ziegler-Natta HDPE ZN1.

Figure 4 represents the viscosity expressed in Pa.s as a function of frequency expressed in rads/s for the chromium HDPE resin CR1 and for the blends B5 to B8 of a mLLDPE with the chromium HDPE CR1.

Figure 5 represents the Bell ESCR expressed in hours using 10%- and 100%-concerntrated Antarox as deteriorating agent for the HDPE resins ZN1, CR1 and CR2 and for the blends B1 to B15 of a mLLDPE with a HDPE.

Figure 6 represents the Young modulus expressed in Mpa as a function of the density of the semi-high molecilar weight blends expressed in $g/cm^3$.

Figure 7 represents the resilience expressed in $kJ/m^2$ for the HDPE resins ZN1, CR1 and CR2, for the blends B1 to B12 and B14 and for the reference semi-high molecular weight resin Ref1.

Figure 8 represents the resilience expressed in $kJ/m^2$ as a function of HLMI expressed in g/10 min at the temperatures of +23 and -30 °C for the HDPE resins ZN1, CR1, CR2 and CR3 and for the semi-high molecular weight blends B1 to B15.

**Examples.**

The linear low density, high molecular weight metallocene-produced resins used in the blends are described in Table 1.

**Table 1.**

| resin | mPE1 | mPE2 | MPE3 | mPE4 | MPE5 |
|---|---|---|---|---|---|
| catalyst | THI[a] | THI | THI | THI | THI |
| HLMI g/10min | 1.27 | 0.22 | 0.38 | 0.8 | 0.19 |
| Desity $g/cm^3$ | 0.9398 | 0.9242 | 0.9238 | 0.9222 | 0.9218 |

[a] THI is ethylene bis(4,5,6,7- tetrahydro-1-indenyl) zirconium dichloride.

The high density non-metallocene resins are described in Table 2.

**Table 2.**

| resin | ZN1 | CR1 | CR2 | CR3 |
|---|---|---|---|---|
| catalyst | Ziegler-Natta | chrome | chrome | Chrome |
| MI2 g/10min | 2.9 | 0.9 | 0.6 | 0.15 |
| HLMI g/10min | 78 | 78 | 50 | 18 |
| Density g/cm$^3$ | 0.961 | 0.954 | 0.961 | 0.956 |

The resins CR1, CR2 and CR3 are sold by ATOFINA respectively under the names of Finathène® 4810, 6006 and SR572.

Several blends have been prepared from these starting resins. The resins used in the blends and proportions of each of these resins are summarised in Table 3.

**Table 3.**

| | ZN1 | CR1 | CR2 | CR3 | MPE1 | mPE2 | MPE3 | mPE4 | MPE5 | Blend type | D[a] HLMI[b] |
|---|---|---|---|---|---|---|---|---|---|---|---|
| ZN1 | 100% | | | | | | | | | ZN | 0.961 78 |
| B1[c] | 80% | | | | 20% | | | | | ZN THI | 0.958 23.1 |
| B2 | 60% | | | | 40% | | | | | ZN THI | 0.957 5.9 |
| B3[c] | 80% | | | | | 20% | | | | ZN THI | 0.956 19.5 |
| B4 | 60% | | | | | 40% | | | | ZN THI | 0.951 4 |
| CR1 | | 100% | | | | | | | | Cr | 0.954 77.6 |
| B5[c] | | 80% | | | 20% | | | | | Cr THI | 0.953 18.9 |
| B6 | | 60% | | | 40% | | | | | Cr THI | 0.951 4.3 |
| B7[c] | | 80% | | | | 20% | | | | Cr THI | 0.946 14.7 |
| B8 | | 60% | | | | 40% | | | | Cr THI | 0.945 2.5 |
| CR2 | | | 100% | | | | | | | Cr | 0.961 50 |
| B9 | | | 60% | | 40% | | | | | Cr THI | 0.955 3.3 |
| B10 | | | 60% | | | 40% | | | | Cr THI | 0.949 1.7 |
| B11 | | | 68% | | | | | 32% | | Cr THI | 0.949 9.7 |
| B12 | | | 68% | | | | | | 32% | Cr THI | 0.949 7.1 |

(continued)

| | ZN1 | CR1 | CR2 | CR3 | MPE1 | mPE2 | MPE3 | mPE4 | MPE5 | Blend type | D[a] HLMI[b] |
|---|---|---|---|---|---|---|---|---|---|---|---|
| CR3 | | | | 100% | | | | | | Cr | 0.956 18 |
| B13 | | | | 95% | | | 5% | | | Cr THI | 0.954 11.4 |
| B14 | | | | 90% | | | 10% | | | Cr THI | 0.954 8 |
| B15 | | | | 80% | | | 20% | | | Cr THI | 0.951 4.8 |

[a] : the density is expressed in g/cm$^3$.
[b] : the HLMI is expressed in g/10 min.
[c] : comparative examples

These blends were prepared by pelletisation either five times on a Thoret extruder (single screw) or twice on a ZSK-58 extruder (co-rotating twin screw) under the following extrusion conditions:

Thoret.

- 210 °C along the whole barrel
- screw speed between 55 and 75 rpm
- 3 holes die
- fluff under nitrogen stream
- cutting device speed of about 20 mm/s
- flow rate of about 2.5 kg/h
- 5 consecutive extrusions to ensure good mixing homogenisation.

ZSK-58.

- 240 °C in feeding zone), 230 °C in central zone),and 220 °C at die
- screw speed of about 300 rpm
- 15 holes die
- fluff under nitrogen stream
- cutting device speed at the minimum level
- flow rate of about 100 kg/h
- 2 consecutive extrusions to ensure good mixing homogenisation.

The blends resulting from either mixing system have identical characteristics.

The molecular weight distributions of the blends B1 to B4 and of the HDPE ZN1 are represented in Figure 1 and those of blends B9 to B12 and of the HDPE CR2 are represented in Figure 2. Both figures show that all blends have a bimodal molecular weight distribution and an increased high molecular weight portion.

A dynamic rheology analysis has been carried out on all blends in relation with processablility. The results are presented in Figures 3 and 4. Figure 3 is a plot of the viscosity as a function of frequency for the resin ZN1 and the blends B1 to B4 and Figure 4 is a plot of the viscosity as a function of frequency for the resin CR1 and the blends B5 to B8

These blends have been tested for stress crack resistance. In order to evaluate the gain in stress crack resistance of the blends prepared according to the invention, Bell Environmental Stress Crack Resistance test (Bell ESCR) has been performed using 10%- and 100% -concentrated solutions of Antarox as deteriorating agent at a testing temperature of 50°C. It must be noted that for polarity reasons, the 10%-concentrated solution of Antarox is more detrimental to stress crack resistance than the 100%-concentrated solution of Antarox. The results are displayed in Figure 5 representing

the ESCR in hours for the two concentrations of deteriorating agent and for various blends. The figure shows a remarkable improvement in ESCR for the blends of the invention. The key parameters for this improvement are the density of the low-density polyethylene resin and the final density of the blend. It is further observed that the ESCR improves if the content of low-density polyethylene incorporated in the blend increases. This effect can be seen for example when comparing blends B3 and B4: both blends are prepared with the same components ZN1 and mPE2, B3 and B4 containing respectively 20 and 40 wt% of the low-density component

Tensile test and tensile impact tests have also been carried out and the balance between stiffness and toughness has been evaluated for all blends.

The stiffness has been measured following the method of the tensile test ISO 527. It is observed that the density of the final blend is the key factor: the stiffness increases with increasing density. This can be seen on Figure 6 representing the Young's modulus in Mpa as a function of the density of the final blend.

The impact resistance was measured at 23 °C and at -30 °C following the method of standard test ISO 8256. The results are displayed on Figure 7 that represents the resilience in kJ/$m^2$ at the two testing temperatures of 23 and -30 °C and for the various blends. For comparison, the resilience of a high molecular weight resin used as reference resin in the field for blow-moulded drums and labelled Ref1, has also been plotted. Ref1 is a chromium-catalysed resin sold by ATOFINA under the name Finathène® 56020S. It must be noted that a value of the resilience larger than 100 kJ/$m^2$ denotes a good impact resistance whereas values above 200 kJ/$m^2$ denote an exceptional impact resistance. The results show that the impact resistance increases with increasing amounts of mLLDPE, and at equal amounts of mLLDPE it increases with decreasing density of the mLLDPE used in the blend. The impact resistance is also seen to increase with increasing molecular weight of the high density polyethylene resin. This is a consequence of the higher molecular weight resin having a higher viscosity thereby allowing the impact energy to be better absorbed and dissipated: the higher the viscosity and thus the molecular weight, the higher the impact resistance.

The influence of the chain length on impact is displayed in Figure 8 representing a plot of the resilience expressed in kJ/$m^2$ as a function of HLMI expressed in g/10 min. The resilience of the blends according to the present invention is equal to or larger than 100 kJ/$m^2$ for resins having a HLMI smaller than or equal to 35 g/10 min for the two testing temperatures of 23 and -30 °C. The resilience is at least 200 kJ/$m^2$ for HLMI's that are respectively at most 4 g/10 min when tested at -30 °C, and at most 8 g/10 min when tested at 23 °C. The semi-high molecular weight resins used as reference in the field display a similar behaviour but exhibit a lower impact resistance at equivalent temperature and HLMI.

Falling tests were carried out, using the method of UN procedure ADR appendix A V, on 10-litre blow-moulded jerrycans weighing 420 g and prepared respectively with

- blend B14, a 90/10 blend of the chromium catalysed resin CR3 and the mLLDPE resin mPE3, and
- the chromium catalysed resin Ref1 (Finathène® 56020S) used as reference in the field for its remarkable impact resistance.

Additionally, the test was carried out on a 10-litre jerrycan weighing 380 g produced with blend B14.
The falling test was performed on all bottles at -18 °C and at -40 °C. The results are displayed in Table 4.

**Table 4.**

| Resin | Falling height at -18°C m | Falling height at -40°C M |
|---|---|---|
| Ref1 | 2.75 | 2.75 |
| B14 - 420 g | 6.5 | 6 |
| B14 - 380 g | 3.25 | 3.25 |

The data show that the falling height at which cracks appear has been considerably improved by the blends of the present invention, even with reduced weight, and therefore with reduced wall thicknesss, with respect to a resin that was considered as excellent in the field. Finathène® 56020S (Ref1) is considered as the reference resin for impact resistance in the drum market.

The blends of the present invention can be used in blow moulding applications, such as for example containers, jerrycans, drums, intermediate bulk containers (IBC), heating oil tanks (HOT), fuel tanks, or pipes. Because of the substantial improvement in environmental stress crack resistance, in impact resistance and in the falling test, it is possible to reduce the wall thickness. This is of considerable interest, especially in the automotive industry, as it provides an important gain in processing time.

The fire resistance is also improved because a slightly higher density is obtainable in the blends of the present invention than in single semi-high molecular weight resins.

Because of the excellent performances of the blends prepared according to the present invention, it is possible to cover a large field of applications with a small set of starting resins by varying the blend composition, both in the choice of the resins and the amount of each selected resin.

## Claims

1. A process for the preparation of polyethylene resins having a multimodal molecular weight distribution that comprises the steps of:

   (i) supplying ethylene and the alpha-definic comonomer to the reactor containing a metallocene catalyst in order to prepare a first high molecular weight metallocene-produced linear low density polyethylene (mLLDPE) resin having a density of from 0.920 to 0.940 g/cm$^3$ and a HLMI of from 0.01 to 2 g/10 min (ASTM D 1238)
   (ii) supplying to the reactor a chromium-based catalyst or a Ziegler-Natta catalyst and feeding ethylene and comonomer, if present, to prepare a second high density polyethylene (HDPE) having a monomodal molecular weight distribution and prepared either with a Ziegler-Natta or with a chromium based catalyst, said polyethylene having a density ranging from 0.950 to 0.970 g/cm$^3$ and a HLMI of from 5 to 100 g/10 min;
   (iii) physically blending together the first and second polyethylenes to form a polyethylene resin having a semi-high molecular weight, a multimodal molecular weight distribution, a density ranging from 0.948 to 0.958 g/cm$^3$ and a HLMI of from 2 to 12 g/10 min.

2. A process according to claim 1 wherein the second polyethylene is produced using a chromium-oxide based catalyst.

3. A process according to claim 1 or claim 2 wherein the first metallocene-produced linear low-density polyethylene has a density of not more than 0.935 g/ml.

4. A process according to any one of the preceding claims wherein the final polyethylene resin is a physical blend comprising at least 5 wt% of the first metallocene-produced linear low density polyethylene.

5. A process according to any one of the preceding claims wherein the final polyethylene resin is a physical blend comprising from 15 to 50 wt% of the first metallocene-produced linear low density polyethylene and from 85 to 50 wt% of the second high density polyethylene.

6. A process for the preparation of polyethylene resins having a bimodal molecular weight distribution which comprises the steps of:

   (i) providing a first polyethylene by contacting an ethylene monomer and a comonomer comprising an alpha-olefin having from 3 to 10 carbon atoms with a first catalyst system in a first reactor under first polymerisation conditions to produce a first polyethylene having a first molecular weight, an HLMI of not more than 1.5 g/10min and a first density of not more than 0.930g/ml and the first catalyst system comprising (a) a metallocene catalyst comprising a bis tetrahydroindenyl catalyst component; and (b) an activating agent capable of activating the catalyst component;
   (ii) supplying to the reactor a chromium-based catalyst or a Ziegler-Natta catalyst and feeding ethylene and comonomer, if present, to prepare a second polyethylene having a second higher density and a second larger HLMI than the first polyethylene, the density being comprised in the range of 0.950 to 0.970 g/cm$^3$ and the HLMI being comprised in the range of 5 to 100 g/10 min, said polyethylene having a monomodal molecular weight distribution;
   (iii) physically blending together the first and second polyethylenes to form a polyethylene resin having a bimodal molecular weight distribution, an HLMI of from 2 to 12 g/10min and a density of from 0.948 to 0.958 g/ml.

7. A process according to any one of the preceding claims wherein the metallocene catalyst used to prepare the first linear low density polyethylene is ethylene bis(4,5,6,7-tetrahydro-1-indenyl) zirconium dichloride.

8. Use of the polyethylene resin prepared according to any one of the preceding claims, in blow moulding applications, to prepare articles having improved environmental stress crack resistance.

9. Use of the polyethylene resin prepared according to any one of claims 1 to 7 in blow moulding applications, for preparing articles having improved impact resistance and improved processing.

10. Use of the polyethylene resin prepared according to any one of claims 1 to 7 to prepare pipes.

11. Use of the polyethylene resin prepared according to any one of claims 1 to 7 to prepare fuel tanks.

12. Use of the polyethylene resin prepared according to any one of claims 1 to 7 to prepare jerrycans, drums, intermediate bulk containers (IBC) or heating oil tanks (HOT).

**Patentansprüche**

1. Ein Verfahren zur Herstellung von Polyethylenharzen mit einer multimodalen Molmassenverteilung, das die Schritte umfasst des :

    (i) Zuführens von Ethylen und des Alpha-Olefin-Comonomers zu dem Reaktor, der einen Metallocenkatalysator enthält, um ein erstes metallocenproduziertes lineares, niedrigdichtes Polyethylen(mLLDPE)-Harz mit hoher Molmasse herzustellen, das eine Dichte von 0,920 bis 0,940 g/$cm^3$ und einen HLMI von 0,01 bis 2 g/10 min (ASTM D1238) aufweist,
    (ii) Zuführens eines Katalysators auf Chrombasis oder eines Ziegler-Natta-Katalysators zu dem Reaktor und Zuführens von Ethylen und Comonomer, falls vorhanden, um ein zweites hochdichtes Polyethylen (HDPE) mit einer monomodalen Molmassenverteilung und entweder mit einem Ziegler-Natta- oder mit einem Katalysator auf Chrombasis hergestellt, herzustellen, wobei besagtes Polyethylen eine Dichte im Bereich von 0,950 bis 0,970 g/$cm^3$ und einen HLMI von 5 bis 100 g/10 min hat ;

    physikalischen Miteinandervermischens des ersten und zweiten Polyethylens, um ein Polyethylenharz zu bilden, das eine halbhohe Molmasse, eine multimodale Molmassenverteilung, eine Dichte im Bereich von 0,948 bis 0,958 g/$cm^3$ und einen HLMI von 2 bis 12 g/10 min hat.

2. Ein Verfahren gemäß Anspruch 1, wobei das zweite Polyethylen unter Verwendung eines Katalysators auf Chrombasis produziert ist.

3. Ein Verfahren gemäß Anspruch 1 oder Anspruch 2, wobei das erste metallocenproduzierte lineare niedrigdichte Polyethylen eine Dichte von nicht mehr als 0,935 g/ml hat.

4. Ein Verfahren gemäß einem der vorgenannten Ansprüche, wobei das letztendliche Polyethylenharz ein physikalisches Gemisch ist, das wenigstens 5 Gew. - % des ersten metallocenproduzierten linearen niedrigdichten Polyethylens umfasst.

5. Ein Verfahren gemäß einem der vorgenannten Ansprüche, wobei das letztendliche Polyethylenharz ein physikalisches Gemisch ist, das 15 bis 50 Gew.- % des ersten metallocenproduzierten linearen niedrigdichten Polyethylens und 85 bis 50 Gew.- % des zweiten hochdichten Polyethylens umfasst.

6. Ein Verfahren zur Herstellung von Polyethylenharzen mit einer bimodalen Molmassenverteilung, das die Schritte umfasst des :

    Verschaffens eines ersten Polyethylens durch Inkontaktbringen eines Ethylenmonomers und eines Comonomers, das ein Alpha-Olefin mit 3 bis 10 Kohlenstoffatomen enthält, mit einem ersten Katalysatorsystem in einem ersten Reaktor unter ersten Polymerisationsbedingungen, um ein erstes Polyethylen mit einer ersten Molmasse, einem HLMI von nicht mehr als 1,5 g/10 min und einer ersten Dichte von nicht mehr als 0,930 g/ml zu produzieren und wobei das erste Katalysatorsystem (a) einen Metallocenkatalysator umfasst, der eine Bistetrahydroindenyl-Katalysatorkomponente umfasst ; und (b) einen Aktivator umfasst, der in der Lage ist, die Katalysatorkomponente zu aktivieren ;
    (ii) Zuführens eines Katalysator auf Chrombasis oder eines Ziegler-Natta-Katalysators zu dem Reaktor und Zuführens von Ethylen und Comonomer, falls vorhanden, um
    ein zweites Polyethylen mit einer zweiten höheren Dichte und einem zweiten höheren HLMI als das erste Polyethylen herzustellen, wobei die Dichte im Bereich von 0,950 bis 0,970 g/$cm^3$ liegt und der HLMI im Bereich von 5 bis 100 g/10 min liegt, wobei besagtes Polyethylen eine monomodale Molmassenverteilung hat ;
    physikalischen Miteinandervermischens des ersten und zweiten Polyethylens, um ein Polyethylenharz zu bilden, das eine bimodale Molmassenverteilung, einen HLMI von 2 bis 12 g/10 min und eine Dichte von 0,948 bis 0,958

g/ml hat.

7. Ein Verfahren gemäß einem der vorgenannten Ansprüche, wobei der zur Herstellung des ersten linearen niedrigdichten Polyethylens verwendete Metallocenkatalysator Ethylen-bis(4,5,6,7-tetrahydro-1-indenyl)zirkoniumdichlorid ist.

8. Verwendung des gemäß einem der vorgenannten Ansprüche hergestellten Polyethylenharzes in Blasformanwendungen, zur Herstellung von Artikeln mit verbesserter Spannungsrissbeständigkeit.

9. Verwendung des gemäß einem der Ansprüche 1 bis 7 hergestellten Polyethylenharzes in Blasformanwendungen, zur Herstellung von Artikeln mit verbesserter Schlagfestigkeit und verbesserter Verarbeitung.

10. Verwendung des gemäß einem der Ansprüche 1 bis 7 hergestellten Polyethylenharzes zur Herstellung von Rohren.

11. Verwendung des gemäß einem der Ansprüche 1 bis 7 hergestellten Polyethylenharzes zur Herstellung von Brennstofftanks.

12. Verwendung des gemäß einem der Ansprüche 1 bis 7 hergestellten Polyethylenharzes zur Herstellung von Kanistern, Fässern, Zwischenlager-Schüttgutcontainern (ICB) oder Heizöltanks (HOT).

**Revendications**

1. Procédé pour la préparation de résines de polyéthylène possédant une distribution multimodale du poids moléculaire, qui comprend les étapes consistant à :

   (i) alimenter de l'éthylène et les comonomères alpha-oléfiniques au réacteur contenant un catalyseur de métallocène dans le but de préparer une première résine de polyéthylène linéaire basse densité (mLLDPE) à poids moléculaire élevé, préparée à partir d'un métallocène, qui possèdent une densité de 0,920 à 0,940 g/$cm^3$ et une valeur HLMI de 0,01 à 2 g/10 min (norme ASTM D 1238) ;
   (ii) alimenter le réacteur avec un catalyseur à base de chrome ou un catalyseur de type Ziegler-Natta et alimenter de l'éthylène et les comonomères, lorsqu'ils sont présents, pour préparer un deuxième polyéthylène haute densité (HDPE), possédant une distribution monomodale du poids moléculaire et qui a été préparé, soit avec un catalyseur de type Ziegler-Natta, soit avec un catalyseur à base de chrome, ledit polyéthylène possédant une densité qui se situe dans la plage de 0,950 à 0,970 g/$cm^3$ et une valeur HLMI de 5 à 100 g/10 min ;
   (iii) soumettre à un mélange physique réciproque le premier et le deuxième polyéthylène pour former une résine de polyéthylène possédant un poids moléculaire semi-élevé, une distribution multimodale du poids moléculaire, une densité qui se situe dans la plage de 0,948 à 0,958 g/$cm^3$ et une valeur HLMI de 2 à 12 g/10 min.

2. Procédé selon la revendication 1, dans lequel le deuxième polyéthylène est préparé en utilisant un catalyseur à base d'oxyde de chrome.

3. Procédé selon la revendication 1 ou 2, dans lequel le premier polyéthylène linéaire basse densité préparé à partir d'un métallocène possède une densité qui n'est pas supérieure à 0,935 g/ml.

4. Procédé selon l'une quelconque des revendications précédentes, dans lequel la résine finale de polyéthylène représente un mélange physique comprenant le premier polyéthylène linéaire base densité préparé à partir d'un métallocène, à concurrence d'au moins 5 % en poids.

5. Procédé selon l'une quelconque des revendications précédentes, dans lequel la résine finale de polyéthylène représente un mélange physique comprenant le premier polyéthylène linéaire base densité préparé à partir d'un métallocène à concurrence de 15 à 50 % en poids et le deuxième polyéthylène haute densité à concurrence de 85 à 50 % en poids.

6. Procédé pour la préparation de résines de polyéthylène possédant une distribution bimodale du poids moléculaire, qui comprend les étapes consistant à :

   (i) procurer un premier polyéthylène par mise en contact d'un monomère d'éthylène et d'un comonomère comprenant une alpha-oléfine contenant de 3 à 10 atomes de carbone avec un premier système de catalyseur dans un premier réacteur dans des premières conditions de polymérisation pour obtenir un premier polyéthylène possédant un premier poids moléculaire, une valeur HLMI qui n'est pas supérieure à 1,5 g/10 min et une première densité qui n'est pas supérieure à 0,930 g/ml, le premier système de catalyseur comprenant (a) un catalyseur de type métallocène comprenant un composant de catalyseur de bis tétrahydroindényle ; et (b) un agent d'activation capable de activer le composant de catalyseur ;
(ii) alimenter au réacteur un catalyseur à base de chrome ou un catalyseur de type Ziegler-Natta et alimenter de l'éthylène et les comonomères, lorsqu'ils sont présents, pour préparer un deuxième polyéthylène haute densité (HDPE), possédant une deuxième densité supérieure et une deuxième valeur HLMI supérieure à celles du premier polyéthylène, la densité étant comprise dans la plage de 0,950 à 0,970 g/$cm^3$ et la valeur HLMI étant comprise dans la plage de 5 à 100 g/10 min, ledit polyéthylène possédant une distribution monomodale du poids moléculaire ;
(iii) soumettre à un mélange physique réciproque le premier et le deuxième polyéthylène pour former une résine de polyéthylène possédant une distribution bimodale du poids moléculaire, une valeur HLMI de 2 à 12 g/10 min et une densité qui se situe dans la plage de 0,948 à 0,958 g/$cm^3$.

7. Procédé selon l'une quelconque des revendications précédentes, dans lequel le catalyseur de métallocène que l'on utilise pour préparer le premier polyéthylène linéaire basse densité est le dichlorure d'éthylène bis (4,5,6,7-tétrahydro-1-indényl)zirconium.

8. Utilisation de la résine de polyéthylène que l'on a préparée conformément à l'une quelconque des revendications précédentes, dans des applications de moulage par extrusion-soufflage, pour préparer des articles possédant une meilleure résistance à la tendance au fendillement par contrainte environnementale.

9. Utilisation de la résine de polyéthylène que l'on a préparée conformément à l'une quelconque des revendications 1 à 7, dans des applications de moulage par extrusion-soufflage dans le but de préparer des articles qui manifestent une meilleure résistance aux chocs et une meilleure aptitude au traitement.

10. Utilisation de la résine de polyéthylène que l'on a préparée conformément à l'une quelconque des revendications 1 à 7, pour préparer des conduites.

11. Utilisation de la résine de polyéthylène que l'on a préparée conformément à l'une quelconque des revendications 1 à 7, pour préparer des réservoirs d'essence.

12. Utilisation de la résine de polyéthylène que l'on a préparée conformément à l'une quelconque des revendications 1 à 7, pour préparer des nourrices à essence, des fûts, des grands récipients pour vrac (IBC) ou des réservoirs pour le mazout domestique (HOT).

Figure 1.

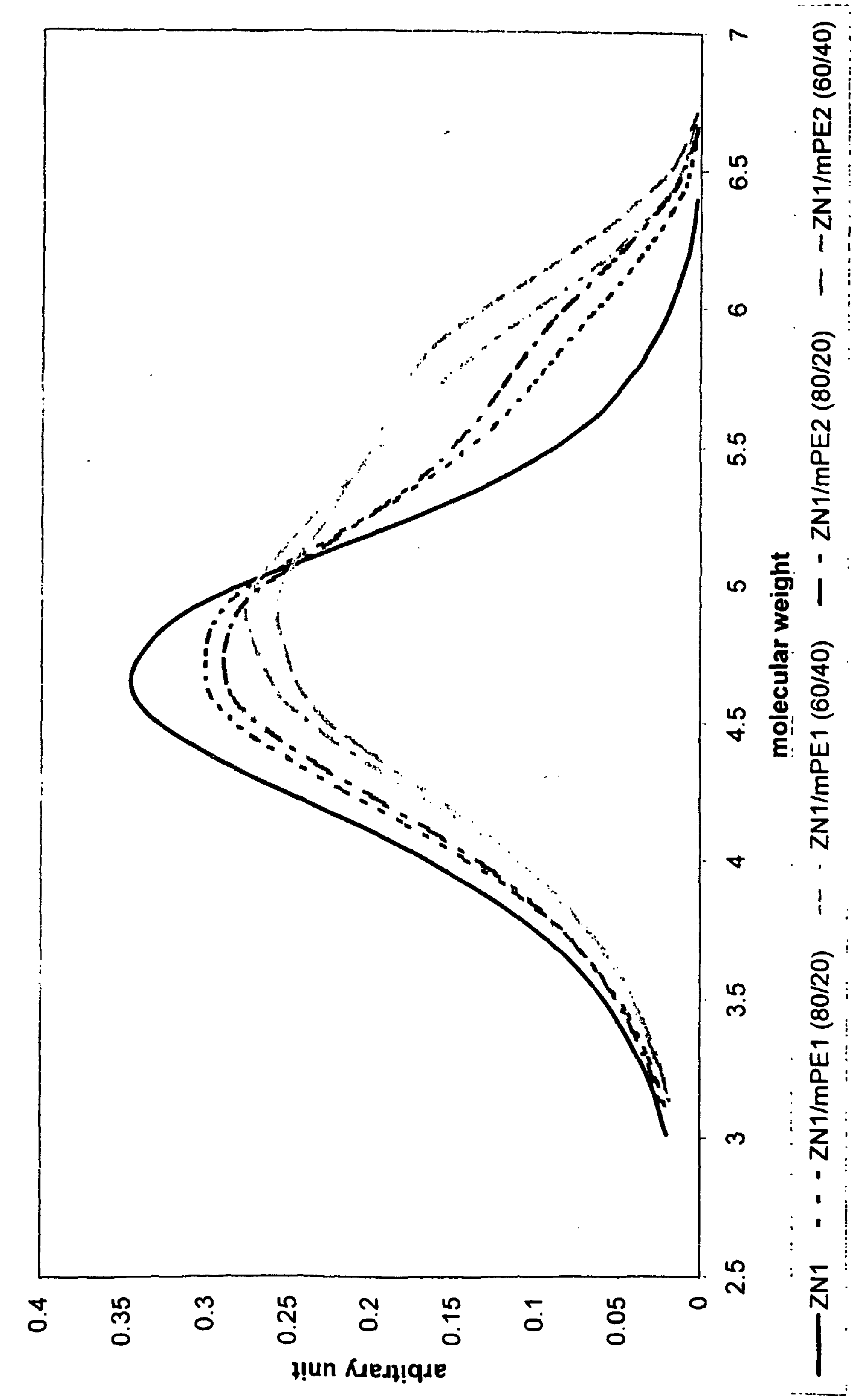
arbitrary unit
0
0.05
0.1
0.15
0.2
0.25
0.3
0.35
0.4
2.5
3
3.5
4
4.5
5
5.5
6
6.5
7
molecular weight
ZN1
ZN1/mPE1 (80/20)
ZN1/mPE1 (60/40)
ZN1/mPE2 (80/20)
ZN1/mPE2 (60/40)

Figure 2.

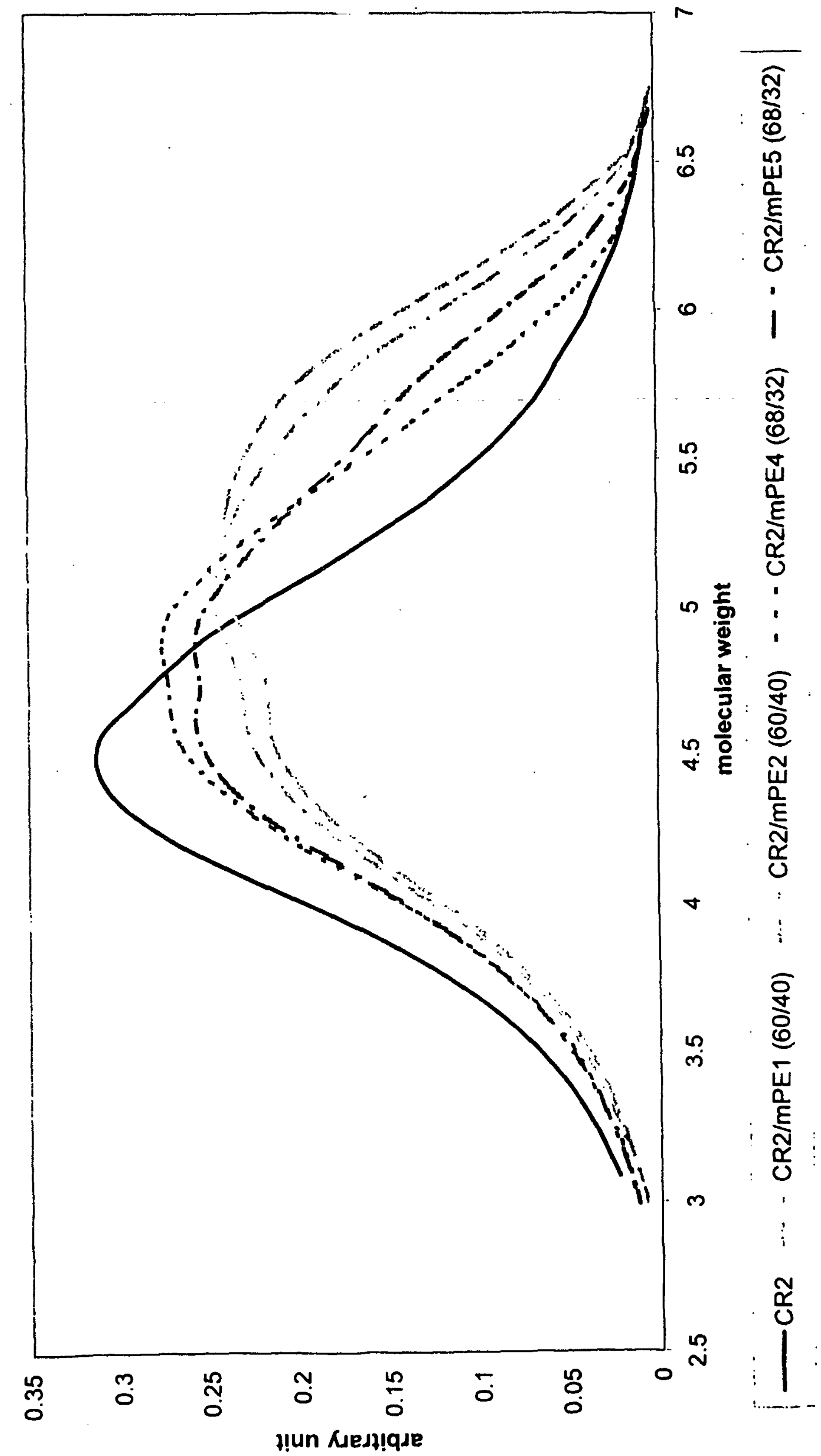

arbitrary unit
0.35
0.3
0.25
0.2
0.15
0.1
0.05
0
2.5
3
3.5
4
4.5
5
5.5
6
6.5
7
molecular weight
CR2
CR2/mPE1 (60/40)
CR2/mPE2 (60/40)
CR2/mPE4 (68/32)
CR2/mPE5 (68/32)

FIG. 3

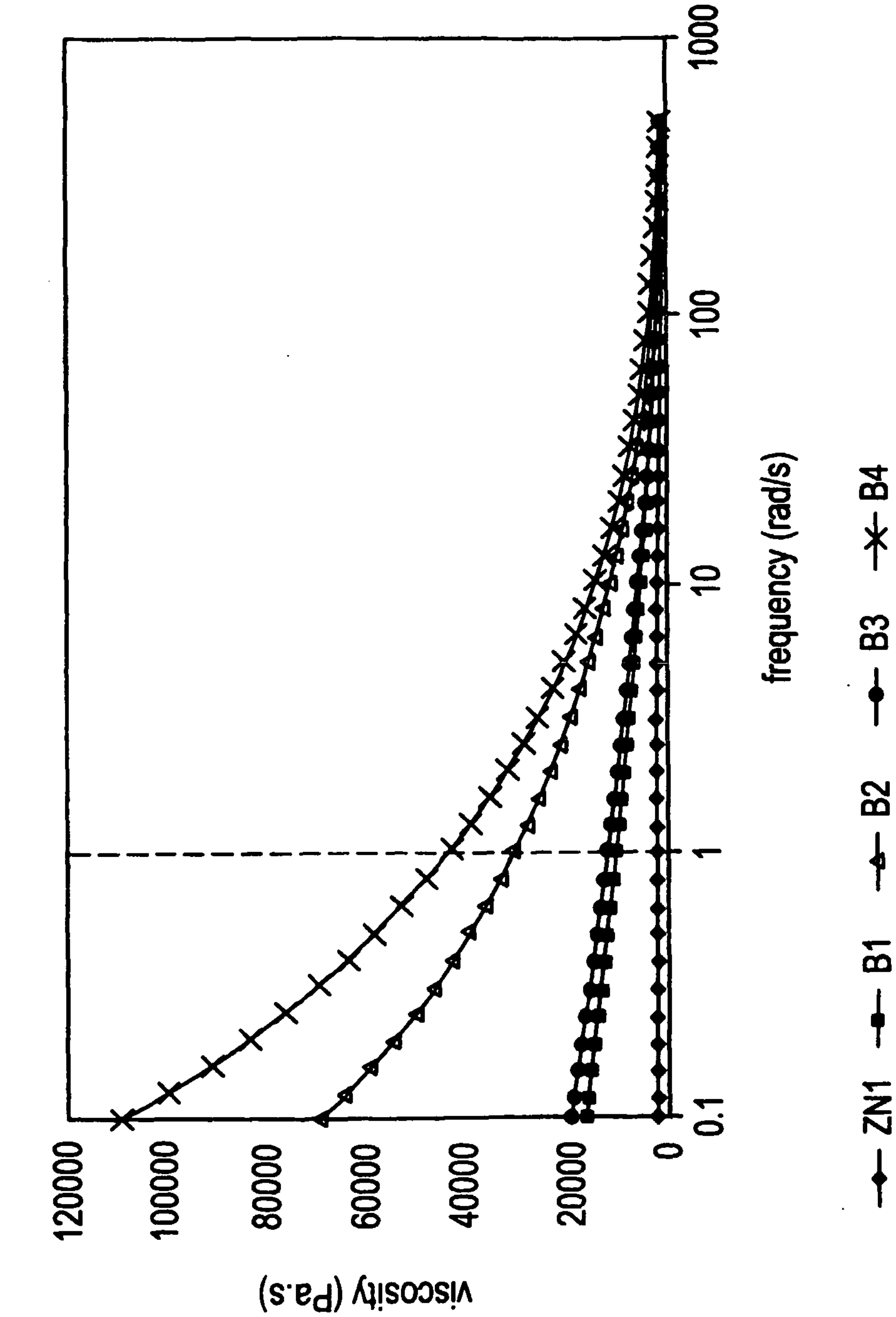

viscosity (Pa.s)
120000
100000
80000
60000
40000
20000
0
0.1
1
10
100
1000
frequency (rad/s)
ZN1
B1
B2
B3
B4

FIG. 4

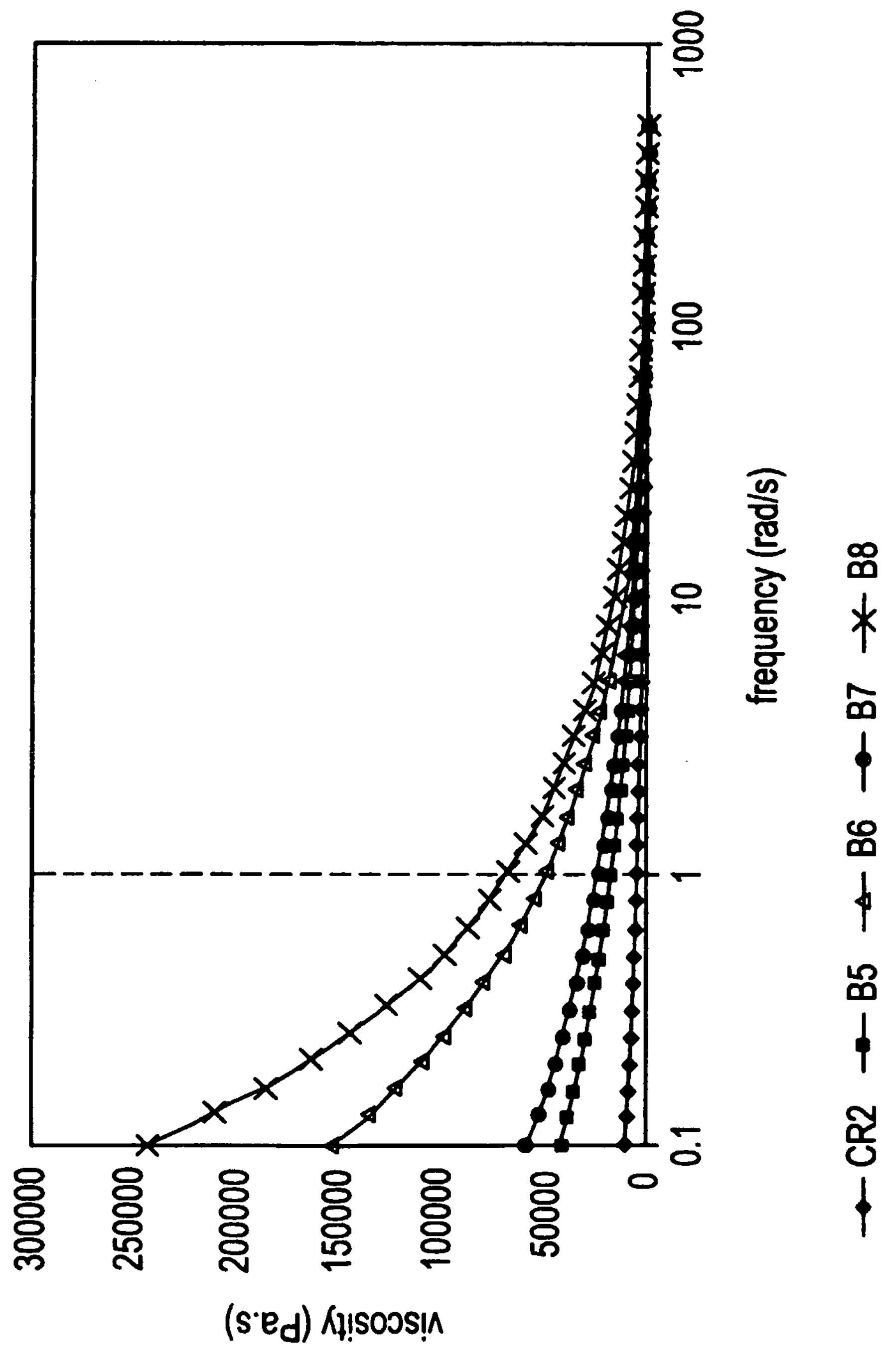
viscosity (Pa.s)
300000
250000
200000
150000
100000
50000
0
0.1
1
10
100
1000
frequency (rad/s)
CR2
B5
B6
B7
B8

FIG. 5

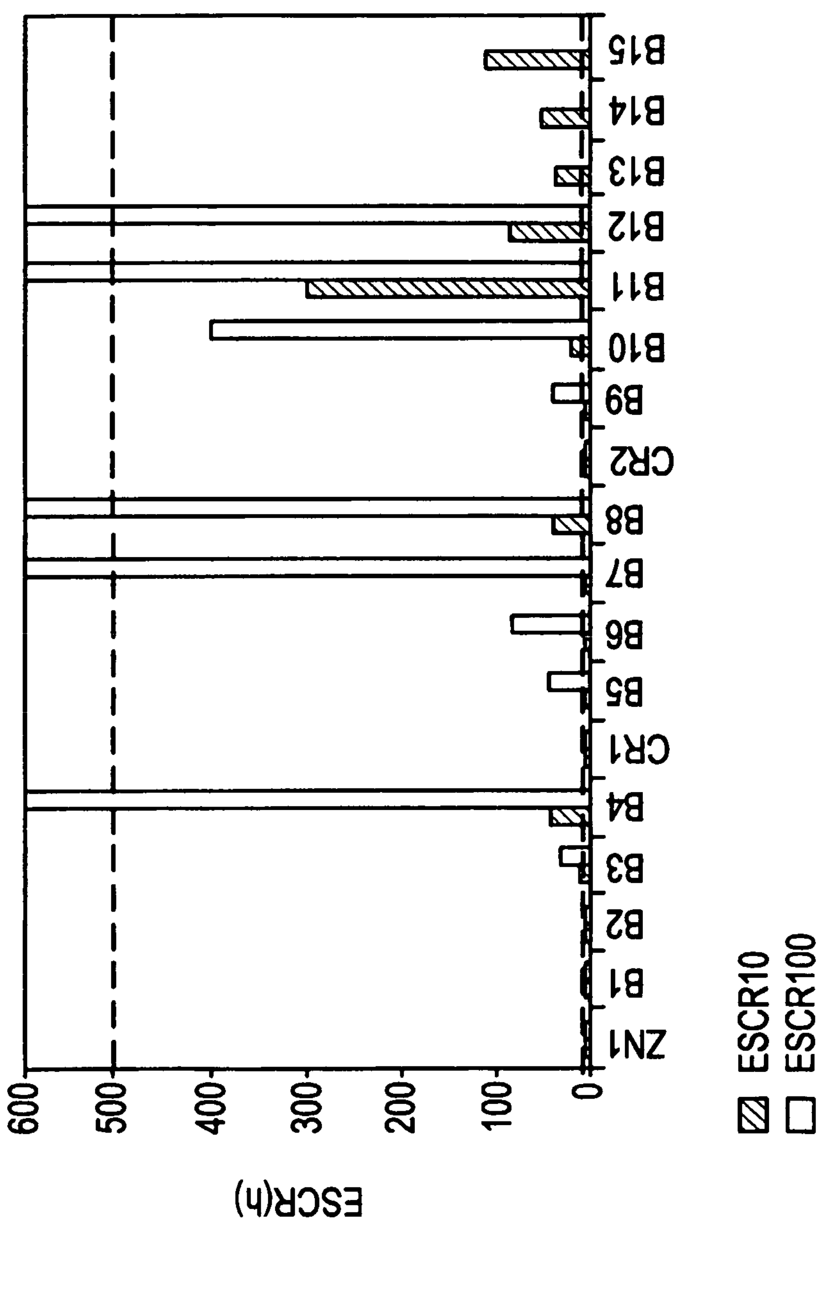
ESCR(h)
600
500
400
300
200
100
0
ZN1
B1
B2
B3
B4
CR1
B5
B6
B7
B8
CR2
B9
B10
B11
B12
B13
B14
B15
ESCR10
ESCR100

FIG. 6

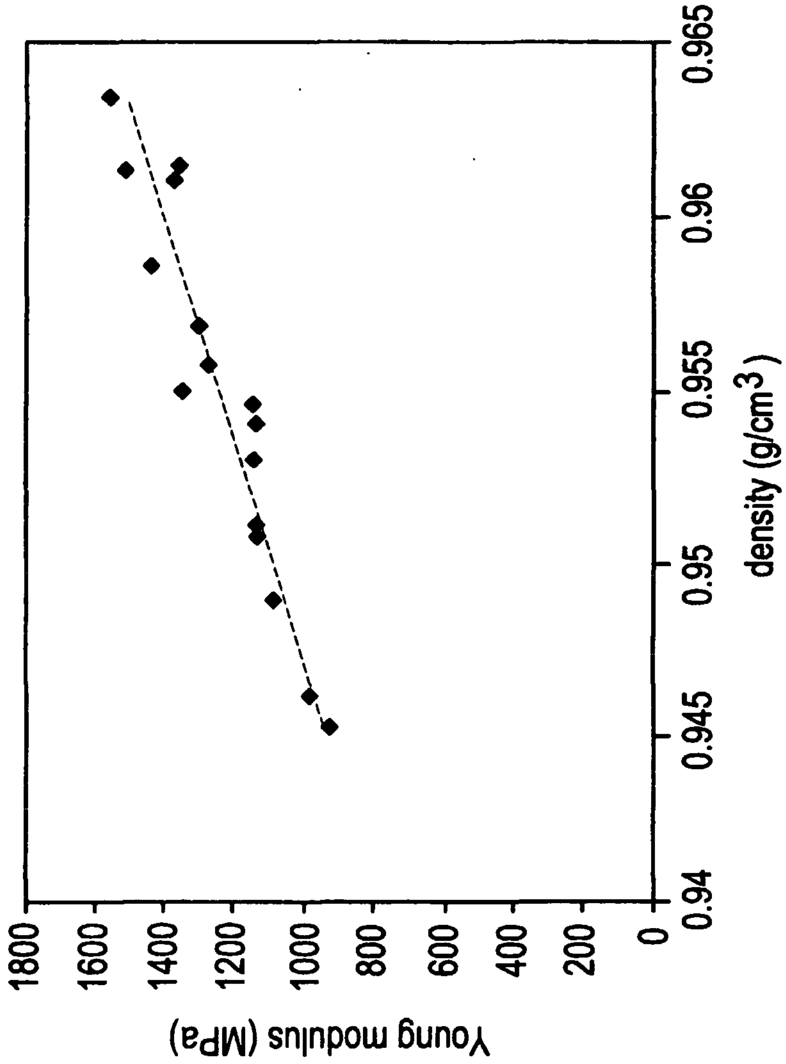
Young modulus (MPa)
0
200
400
600
800
1000
1200
1400
1600
1800
density (g/cm3)
0.94
0.945
0.95
0.955
0.96
0.965

FIG. 7

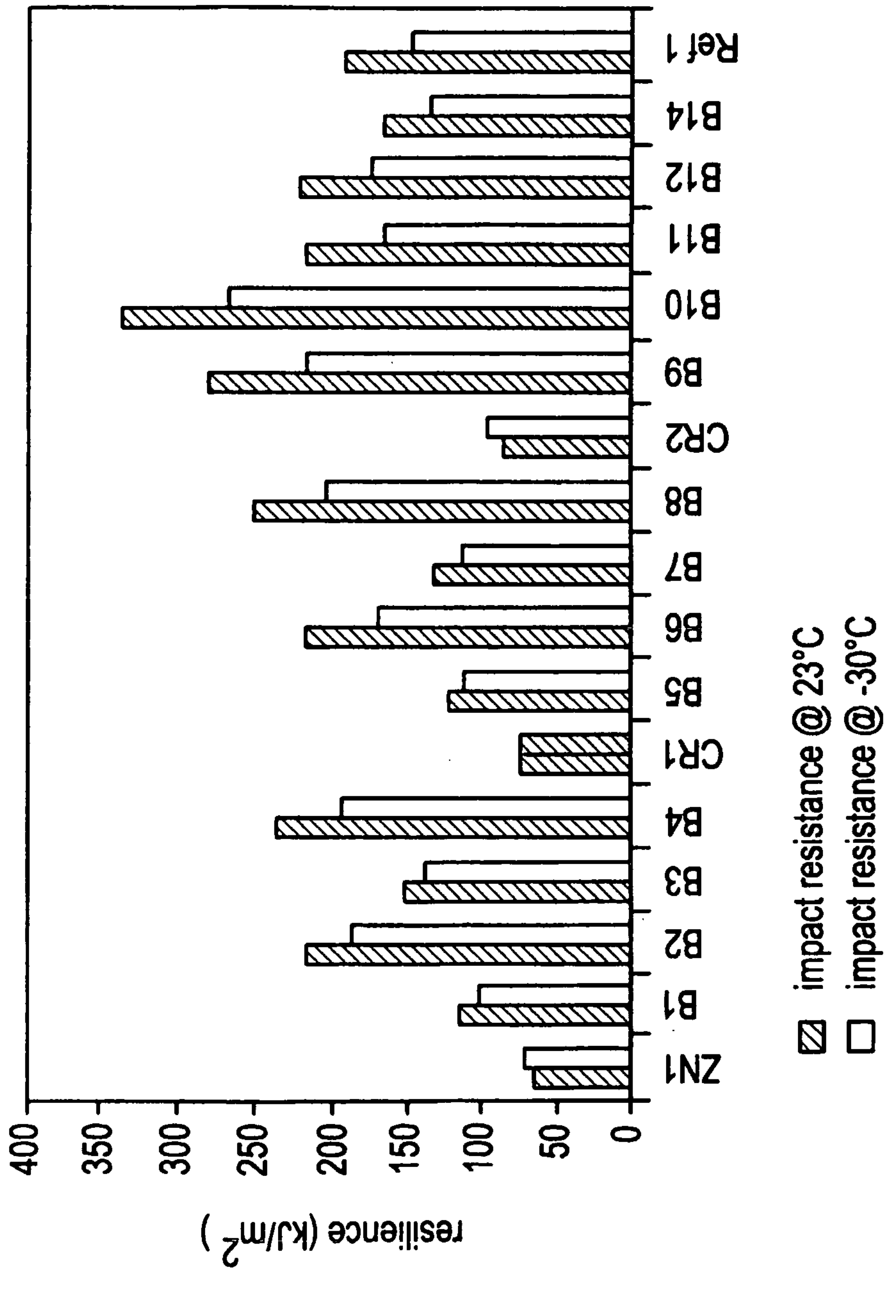

resilience (kJ/m$^2$)
0
50
100
150
200
250
300
350
400
ZN1
B1
B2
B3
B4
CR1
B5
B6
B7
B8
CR2
B9
B10
B11
B12
B14
Ref 1
impact resistance @ 23°C
impact resistance @ -30°C

FIG. 8

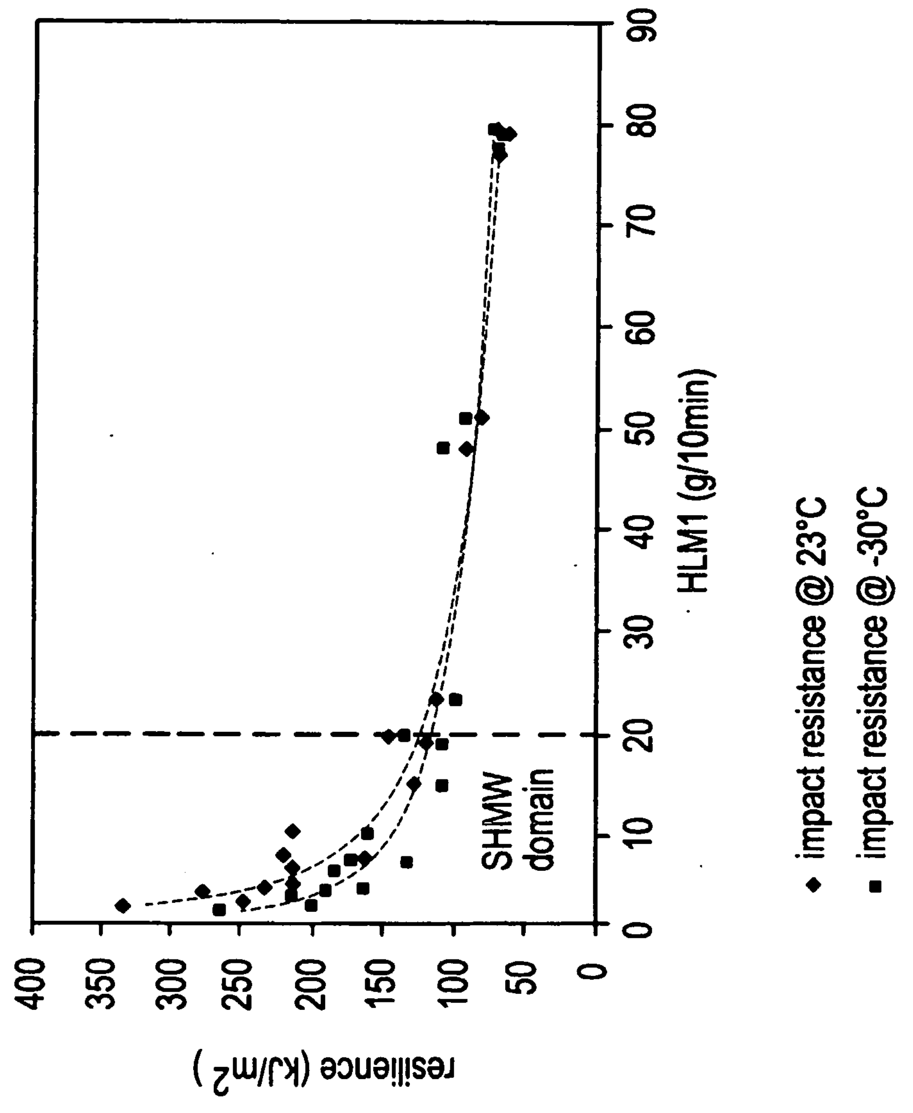
resilience (kJ/m2 )
400
350
300
250
200
150
100
50
0
0
10
20
30
40
50
60
70
80
90
HLM1 (g/10min)
SHMW domain
impact resistance @ 23°C
impact resistance @ -30°C